Europäisches Patentamt

European Patent Office

Office européen des brevets

(11) Publication number: **0 087 974**

**B1**

(12) **EUROPEAN PATENT SPECIFICATION**

(45) Date of publication of patent specification: **31.10.90**

(51) Int. Cl.⁵: **G 05 B 13/04**

(21) Application number: **83301084.6**

(22) Date of filing: **01.03.83**

(54) Adaptive control arrangement.

(30) Priority: **01.03.82 US 353262**

(43) Date of publication of application:
**07.09.83 Bulletin 83/36**

(45) Publication of the grant of the patent:
**31.10.90 Bulletin 90/44**

(84) Designated Contracting States:
**DE FR GB IT**

(56) References cited:
US-A-3 699 989
US-A-3 876 871

PROCEEDINGS OF THE 8th TRIENNIAL WORLD
CONGRESS OF THE INTERNATIONAL
FEDERATION OF AUTOMATIC CONTROL, 24th-
28th August 1981, Kyoto, Japan, vol. 2, pages
738-748, Pergamon Press, Oxford, GB; K.J.
ASTRÖM: "Theory and applications of adaptive
control"

PROCEEDINGS OF THE 5th IFAC/IFIP
INTERNATIONAL CONFERENCE, 14th-17th June
1977, The Hague, NL, pages 543-550, North-
Holland Publishing Co., Amsterdam, NL; W.
BAMBERGER et al.: "Adaptive on-line
optimization of the steady-state behaviour of
slow dynamic processes with process
computers"

(73) Proprietor: **INTERNATIONAL CONTROL
AUTOMATION FINANCE S.A.**
**16 Rue des Bains**
**Ville de Luxembourg (LU)**

(72) Inventor: **Kaya, Azmi**
**2365 Woodpark Road**
**Akron Ohio 44313 (US)**
Inventor: **Lukas, Michael P.**
**429 Ridgewood Drive**
**Eastlake Ohio 44092 (US)**

(74) Representative: **Cotter, Ivan John et al**
**D. YOUNG & CO. 10 Staple Inn**
**London WC1V 7RD (GB)**

Courier Press, Leamington Spa, England.

**EP 0 087 974 B1**

**Description**

This invention relates to adaptive control arrangements.

The automatic control of various industrial processes, such as those found in chemical, power and heat transfer plants, involves the identification and manipulation of plant parameters and disturbances to produce suitable control signals.

Many adaptive control systems require on-line identification of such parameters, which means that a digital computer is required. See for example D. E. Seborg and D. G. Fisher "Experience with Experimental Applications of Multivariable Computer Control", *ASME Paper 78-WA/DSC-26;* and H. Unbehauen, et al "Comparison and Application of DDC Algorithms for a Heat Exchanger", *Journal of Automatics,* Vol. 12, 1976, pp. 393—402.

As disclosed in F. G. Shinskey "Process Control Systems", Chapter 6, McGraw-Hill, 1978, some low-level control systems, which are referred to as selective and adaptive control systems, can be implemented by analog control equipment. The function of selective control is to select the variable to be controlled on a multi-variable process having a single feedback control loop. Adaptive control changes the values of control parameters as the process parameters (such as flow) vary.

In addition, optimum control values can be found by way of optimum tuning processes for a given operating condition of a process. See, for example, A. A. Rovira, et al "Tuning Controllers for Setpoint Changes", *Instruments and Control Systems,* December 1969. In this arrangement, the choice has to be made as to whether optimum control values are to be tuned for a set point change or for various disturbances in the process. Such disturbances include changing values of temperature, flow rate and the like.

Even in single loop controls, computers are being utilised due to the flexibility offered. Accordingly, the use of computers for control of a process has increasingly replaced analog control equipment. See E. B. Dahlin, "Designing and Tuning Digital Controllers", *Instruments and Control Systems,* June, 1968.

A self-tuning regulator, implemented by a special purpose computer, is described in K. J. Astrom, "Theory and Applications of Adaptive Control", *Proceedings of the 8th Triennial World Congress of the International Federation of Automatic Control,* Kyoto, Japan, 1981. The regulator is controlled by an inner loop consisting of the process and an ordinary linear feedback regulator, as well as by an outer loop comprising a recursive parameter estimator and a design calculation block.

Shortcomings of the four mentioned approaches to process control include the expensive use of computers with corresponding software programs and adaptive controls. Shortcomings of the low-level control approaches include a lack of in-depth consideration of the dynamic characteristics, which in-depth consideration is desirable for proper process performance under varying operation conditions. That is, analog controls are not sufficiently accurate or flexible for the calculations necessary to achieve desired performance.

The present invention provides an adaptive control arrangement for a process controlled by a controller which, in use, receives a set point for the process and generates a control output, the process providing a process output and being subjected to a plurality of disturbances, the control arrangement comprising:

a process parameter calculator for receiving the disturbances, the control output and the set point, and for generating a plurality of process parameters that are each a sum of selected functions of each of the disturbances, control output and set point; and

a tuning parameter calculator connected to the process parameter calculator for receiving the plurality of process parameters and receiving at least one performance parameter and at least one design function for setting the design rule of the tuning parameter calculator, the tuning parameter calculator including means for generating at least one tuning parameter as a function of the process parameters, the at least one design function and the at least one performance parameter, and the tuning parameter calculator being connected to the controller for applying the at least one tuning parameter to the controller;

wherein the process and tuning parameter calculators both comprise a plurality of microprocessor-based function blocks connected to each other and operable to manipulate values received according to respective ones of said selected functions and at least one design function.

An adaptive control arrangement which constitutes a preferred embodiment of the invention and is described in detail hereinbelow overcomes or at least alleviates the shortcomings of the prior art. This is accomplished by the utilisation of a plurality of microprocessor-based function blocks which are assembled into the arrangement for achieving the adaptive control without the requirement for an overall controlling computer and corresponding software program. The adaptive control is provided effectively by the combination of function blocks which synthesize an adaptive control scheme which is otherwise available only by computer. In the preferred arrangement the process parameters are generated and utilised to determine optimum controller tuning parameters. These tuning parameters are updated for varying operating conditions. The preferred adaptive control arrangement is improved over the prior art use of analog equipment in that in-depth consideration of dynamic characteristics is provided. The preferred arrangement is simple in design, rugged in construction and economical to manufacture.

The invention will now be further described, by way of illustrative and non-limiting example, with reference to the accompanying drawings, in which:

2

Figure 1 is a block diagram of an adaptive control system comprising a process, a controller therefor and an adaptive control arrangement;

Figure 2 is a block diagram of the adaptive control arrangement or adaption mechanism for establishing adaptive control in the system of Figure 1;

Figure 3 is a block diagram of a process parameter calculator for receiving a plurality of disturbances, a control output and a set point, and for generating a plurality of process parameters;

Figure 4 is a block diagram of a tuning parameter calculator for receiving the process parameters and generating a plurality of tuning parameters according to design functions and information;

Figure 5 is a block diagram of an exemplary tuning parameter calculator showing the use of simple function blocks for implementing the design function;

Figure 6 is a block diagram of an exemplary process parameter calculator showing the implementation of the system embodying the invention using simple function blocks; and

Figure 7 is a schematic representation of a heat exchanger exemplifying the process with a control valve exemplifying the controller for the process.

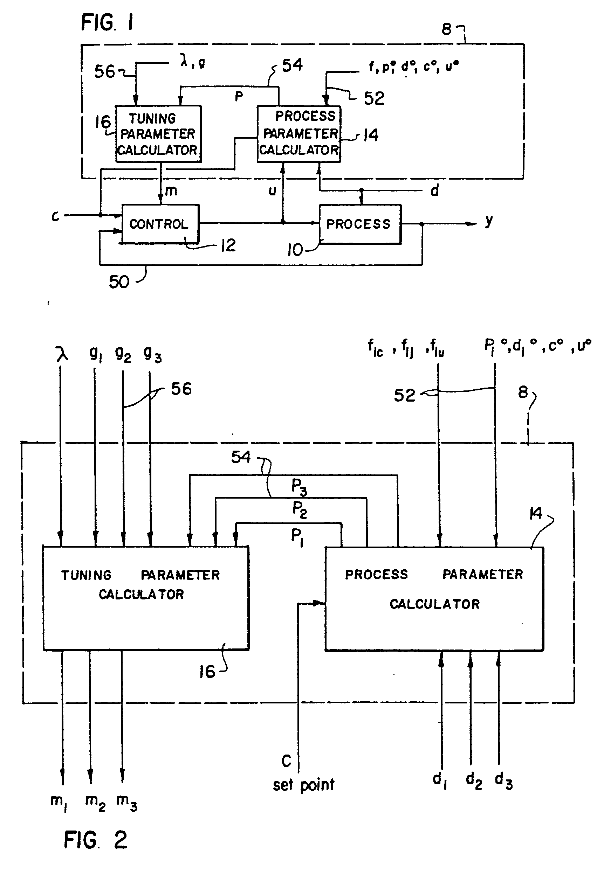

Referring to the drawings, Figure 1 shows an adaptive control system for a process 10 which is controlled by a control system or controller 12. The control system 12 is provided with a feedback control loop by means of a line 50 connecting a control output (y) of the process 10 to one input of the control system 12. The control system 12 is also provided with a set point (c) and generates a control output signal (u).

The process 10 includes a plurality of disturbances (d) which comprise variations in temperature, flow rate and the like. The control system 12 is provided with one or more control tuning parameters (m) for controlling the control output (u).

The illustrated system includes an adaptive control arrangement or adaptation mechanism 8 which establishes an outer or adaptive loop between the process 10 and the control system 12.

The adaptation mechanism 8 comprises a process parameter calculator 14 which receives the disturbances (d), the control output (u) and the set point (c), and also a plurality of items of process structure data over a line or lines 52. The process parameter calculator 14 is connected to a tuning parameter calculator 16 which receives process parameters (P) from the process parameter calculator 14 over a line or lines 54 and design data information over a line or lines 56, this information including at least one performance parameter ($\lambda$) and at least one design function (g).

The adaptation mechanism 8 computes the control tuning parameters (m) in a two-step process. First, all available information (control output (u), process output (y), and measurable disturbances (d)) is used to compute the most current values of various process parameters (P). Then, these values are used to compute the "best" tuning parameters (m) for this process by means of a selected design rule.

In Figure 1, a process with a single input u and a single output y is considered. Figure 2 shows three disturbances $d_1, d_2, d_3$, three process parameters $P_1, P_2, P_3$ and three design functions $g_1, g_2, g_3$, although there is no restriction on the number of disturbances and process parameters. Figure 2 also shows three tuning parameters $m_1, m_2, m_3$, to be calculated within the adaptation mechanism 8. Three tuning parameters are common for a PID (proportional plus integral plus derivative) controller in the process industry, although the invention is not limited to this number. See the above-cited Rovira article for details of PID controllers.

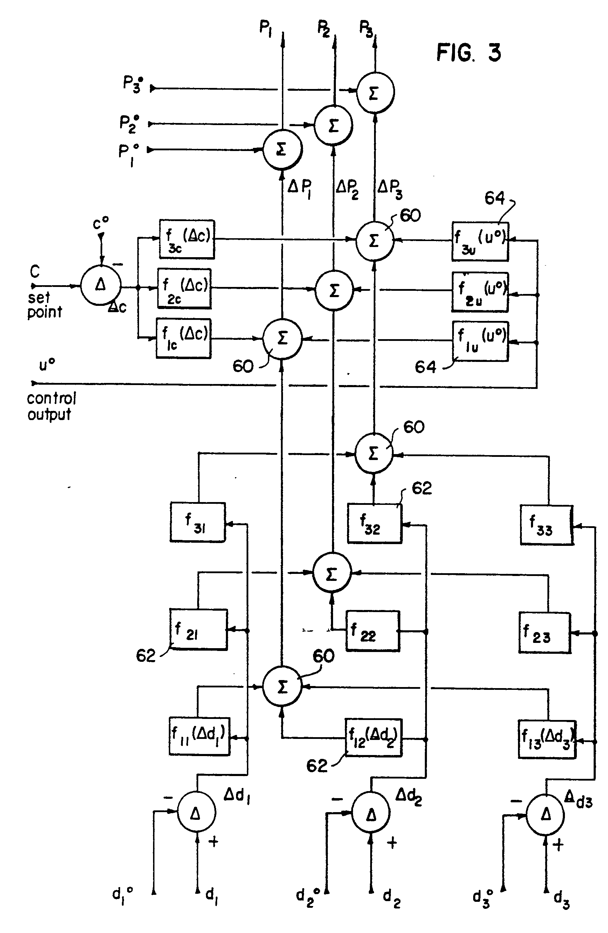

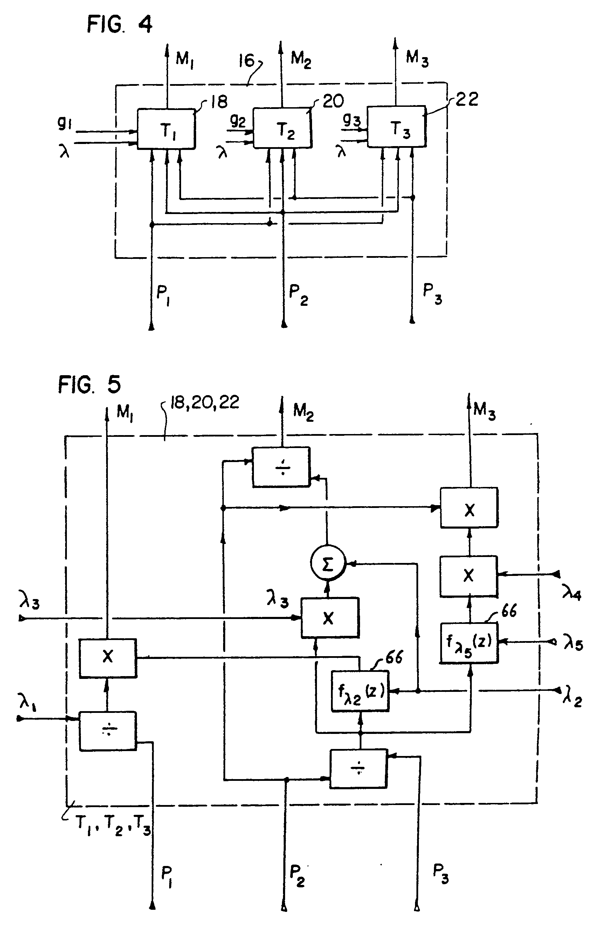

Figure 3 shows details of the process parameter calculator 14. Process sensitivity data are determined from a model process off-line. Process sensitivity functions determine the variations of process parameters with respect to variation in operating conditions such as set point, control, and disturbances. Figure 4 shows the tuning parameter calculator 16. Note that no details details are given for the blocks $T_1, T_2, T_3$ since there are many design rules in industry (see the above-cited Rovira article).

Referring once more to Figure 2, the process structure data or information sent over the lines 52 includes items of process sensitivity data labelled $f_{ic}, f_{ij}, f_{iu}$. The subscript $_i$ of the process sensitivity functions is an integer which corresponds to the process parameter p, and the subscript $_j$, also an integer, corresponds to the disturbances d. The subscripts $_c$ and $_u$ of the process sensitivity functions correspond respectively to set point and control output dependencies of the process parameters p. The process sensitivity functions can be determined as follows:

$$f_{ij} = \frac{\partial P_i}{\partial d_j}$$

$$f_{ic} = \frac{\partial P_i}{\partial c}$$

$$f_{iu} = \frac{\partial P_i}{\partial u}$$

In Figure 3, the process parameter calculator 14 is shown made up of a plurality of function blocks including summing blocks 60 and function generating blocks 62 which generate functions of changes in the three disturbances. Also included are function blocks 64 which generate functions of the set point, or differences in set point from a nominal set point $c^o$.

The functions shown in the disturbance function blocks 62 have a subscript with a first digit which represents the summing stage and a second digit which represents the disturbance. For example, in the first summing stage, the functions $f_{11}$, $f_{12}$, and $f_{13}$ are added.

The set point and control output function generator blocks 64 are similarly identified. In each case, a superscript $^o$ signifies a nominal value. For example $u^o$ is the nominal control output.

Figure 5 shows an example of the tuning parameter calculator 16 to demonstrate the workability of the arrangement. The design functions used to find the tuning parameters are those disclosed in the above-cited Rovira article for the PID algorithm. The terms as used in the following relationship are defined as follows:

a, b, c, e, and f are empirical constants,
$K_c$ is the controller gain,
$K$ is the process gain,
$T_i$ is the reset (integral) time,
$T_d$ is the derivative time, and
$\theta/\tau$ is the ratio of dead time to time constant.

The process parameters $P_1$, $P_2$, $P_3$ correspond to $K$, $\theta$ and $\tau$ and the tuning parameters $M_1$, $M_2$, and $M_3$ correspond to the values $K_c$, $T_i$, and $T_d$.

The empirical constants a to e and f correspond to performance parameters $\lambda_1$ to $\lambda_5$, respectively.

The relationships as disclosed by the Rovira article are as follows:

$$K_c = \frac{a}{K}\left(\frac{\theta}{\tau}\right)^b \tag{1a}$$

$$T_i = \frac{\tau}{b + c\left(\frac{\theta}{\tau}\right)} \tag{1b}$$

$$T_d = \tau\left[e\left(\frac{\theta}{\tau}\right)^f\right] \tag{1c}$$

Letting:

$$a = \lambda_1 \qquad\qquad K = P_1 \qquad\qquad M_1 = K_c$$

$$b = \lambda_2 \qquad\qquad \tau = P_2 \qquad\qquad M_2 = T_i$$

$$c = \lambda_3 \qquad\qquad \theta = P_3 \qquad\qquad M_3 = T_d$$

$$e = \lambda_4$$

$$f = \lambda_5$$

The general block diagram of Figure 4 becomes specific as shown in Figure 5. The equations become:

$$M_1 = \frac{\gamma_1}{P_1} \left(\frac{P_3}{P_2}\right)^{\gamma_2} \tag{2a}$$

$$M_2 = \frac{P_2}{\gamma_2 + \gamma_3 \left(\frac{P_3}{P_2}\right)} \tag{2b}$$

$$M_3 = P_2 \left[\gamma_4 \left(\frac{P_3}{P_2}\right)^{\gamma_5}\right] \tag{2c}$$

The power functions are described by function blocks 66 in Figure 5.

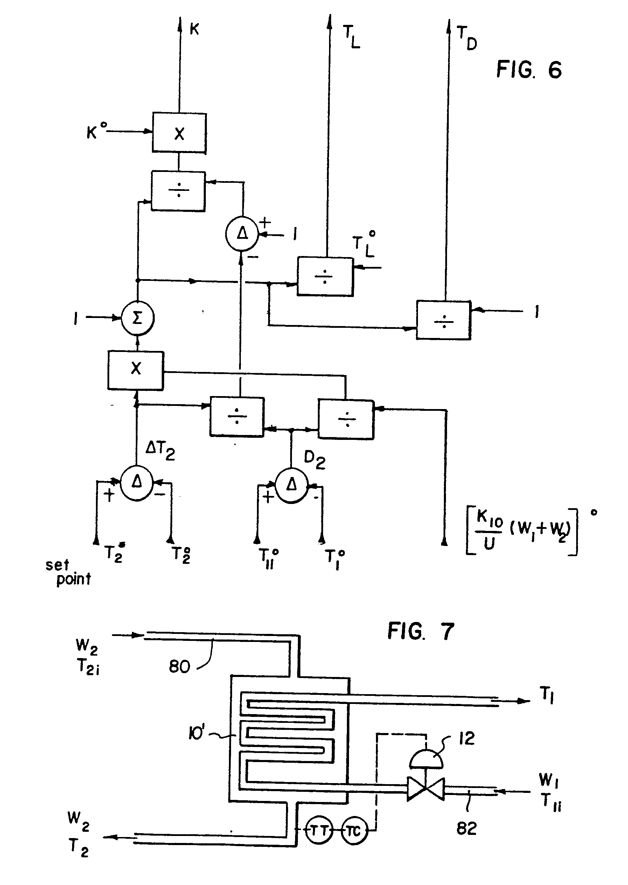

Furthermore, as an illustration of an application of the present control arrangement, the process parameter calculator 14 can be demonstrated for a heat exchanger shown in Figure 7. Figure 6 shows the specific process parameter calculator 14 for the heat exchanger.

In Figure 7, a counterflow heat exchanger 10' is shown as an exemplary process 10 and a control value 12 is shown as an exemplary control system or controller therefor. Cold fluid enters a line 80 at a flow rate $W_2$ and a temperature $T_{2i}$. Its output temperature $T_2$ is controlled by a flow of hot fluid over a line 82 which has a flow rate $W_1$ and an input temperature $T_{1i}$. The hot fluid leaves the heat exchanger at an uncontrolled temperature $T_1$.

In Figure 6, values with a superscript ° again represent nominal values. For the heat exchanger of Figure 7, the following relationship can be demonstrated:

$$K = K^0 \left[1 - \frac{\Delta T_2}{D_2}\right]\left[\frac{1}{1 + D_1 \Delta T_2}\right] \tag{3a}$$

$$T_L = T_L^0 \left[\frac{1}{1 + D_1 \Delta T_2}\right] \tag{3b}$$

$$T_D = T_D^0 \left[\frac{1}{1 + D_1 \Delta T_2}\right] \tag{3c}$$

where

$$K = P_1 \qquad\qquad \Delta T_2 = T_2^* - T_2^0$$

$$T_L = P_2 \qquad\qquad T_2^* = \text{set point} = c$$

$$T_D = P_3 \qquad\qquad D_2 = T_{1i}^0 - T_i^0$$

$$D_1 = \left[\frac{K_{10}}{UD_2}(W_1 + W_2)\right]^0$$

$$K_{10} = \left(\frac{\partial U}{\partial W_1}\right)^0$$

U = overall heat transfer coefficient.

In the foregoing relationships, the parameters $K^\circ$, $T_D^\circ$, and $T_L^\circ$ are the equivalent dynamic parameters of the heat exchanger as measured by a reaction curve at the nominal operating conditions. The parameters $D_1$, $D_2$, $T_2^\circ$ and $K_{10}$ also are evaluated at these nominal conditions.

Figure 6 shows the manipulation of the terms to generate the three process parameters $P_1$, $P_2$, and $P_3$, or their counterparts K, $T_L$, and $T_D$.

## Claims

1. An adaptive control arrangement for a process (10) controlled by a controller (12) which, in use, receives a set point (c) for the process and generates a control output (u), the process (10) providing a process output (y) and being subjected to a plurality of disturbances (d), the control arrangement (8) comprising:

a process parameter calculator (14) for receiving the disturbances (d), the control output (u) and the set point (c), and for generating a plurality of process parameters (p) that are each a sum of selected functions of each of the disturbances (d), control output (u) and set point (c); and

a tuning parameter calculator (16) connected to the process parameter calculator (14) for receiving the plurality of process parameters (p) and receiving at least one performance parameter (λ) and at least one design function (g) for setting the design rule of the tuning parameter calculator (16), the tuning parameter calculator (16) including means for generating at least one tuning parameter (m) as a function of the process parameters (p), the at least one design function (g) and the at least one performance parameter (λ), and the tuning parameter calculator (16) being connected to the controller (12) for applying the at least one tuning parameter (M) to the controller;

wherein the process and tuning parameter calculators (14, 16) both comprise a plurality of microprocessor-based function blocks connected to each other and operable to manipulate values received according to respective ones of said selected functions and at least one design function (g).

2. An adaptive control arrangement according to claim 1, for a process (10') that is a heat exchanger having a cold fluid input (80) with cold fluid flow ($W_2$), cold fluid input temperature ($T_{1i}$) and cold fluid output temperature ($T_2$), and a hot fluid input (82) with hot fluid flow ($W_1$), hot fluid input temperature ($T_{1i}$) and hot fluid output temperature ($T_1$), wherein (Figure 6) the process parameter calculator (14) comprises a first function block for establishing a change ($\triangle T_2$) in cold fluid temperature, a second function block for establishing a change ($D_2$) in hot fluid temperature, a third function block for dividing the cold fluid temperature change by the hot fluid temperature change, a fourth function block for dividing a value which is a function of the cold and hot fluid flow rates ($W_1$, $W_2$) by the hot fluid temperature change, a fifth function block for multiplying the cold fluid temperature change by an output of the fourth function block, a sixth function block for adding a value 1 to an output of the fifth function block, a seventh function block for subtracting an output of the third function block from the value 1, an eighth function block for dividing a nominal value for a second process parameter by the output of said sixth function block to produce a second process parameter ($T_L$), a ninth function block for dividing a nominal value for a third process parameter by the output of the sixth function block to generate a third process parameter ($T_D$), a tenth function block for dividing the output of the seventh function block by the output of the sixth function block, and an eleventh function block for multiplying an output of the tenth function block by a nominal value for a first process parameter to generate a first process parameter (K).

3. An adaptive control arrangement according to claim 1, for a process (10) that is PID controlled, wherein the process parameter calculator (14) is operative to generate first, second and third process parameters ($P_1$, $P_2$, $P_3$) and wherein the tuning parameter calculator (16) comprises (Figure 5) a first function block for dividing a first performance parameter ($\lambda_1$) by the first process parameter ($P_1$), a second function block for dividing the third process parameters ($P_3$) by the second process parameter ($P_2$), a third function block for raising an output of the second function block to a power corresponding to a second performance parameter ($\lambda_2$), a fourth function block for multiplying an output of the third function block by an output of the first function block to generate a first tuning parameter ($m_1$), a fifth function block for raising the output of the second function block to a power corresponding to a fifth performance parameter ($\lambda_5$), a sixth function block for multiplying the output of the second function block by a third performance parameter ($\lambda_3$), a seventh function block or summing an output of the sixth function block with the second performance parameter ($\lambda_2$), an eighth function block for dividing the third process parameter ($\lambda_3$) by an output of the seventh function block to generate a second tuning parameter ($m_2$), a ninth function block for multiplying an output of the fifth function block by a fourth performance parameter ($\lambda_4$), and a tenth function block for multiplying the second process parameter ($P_2$) by an output of the ninth function block to generate a third tuning parameter ($m_3$).

## Patentansprüche

1. Anpassungsfähige Steueranordnung für ein Verfahren (10), welches durch ein Steuergerät (12) gesteuert wird, das im Gebrauch einen Sollwert (c) für das Verfahren aufnimmt und einen Kontrollausgabewert (u) erzeugt, wobei das Verfahren (10) einen Verfahrensausgabewert (y) bereitstellt

6

## EP 0 087 974 B1

und einer Mehrzahl von Störungen (d) ausgesetzt ist, und wobei die Steueranordnung (8) aufweist:

einen Verfahrensparameterrechner (14) zum Erfassen der Störungen (d), des Steuerungsausgangswertes (u) und des Sollwertes (c), und zum Erzeugen einer Mehrzahl von Verfahrensparametern (p), welche jeweils eine Summe ausgewählter Funktionen sowohl der Störungen (d), als auch des Steuerungsausgangswertes (u) als auch des Sollwertes (c) sind, und

einen Abstimmparameterrechner (16), welcher mit dem Verfahrensparameterrechner (14) verbunden ist, um die Mehrzahl von Prozeßparametern (p) aufzunehmen und um zumindest einen Durchführungsparameter ($\lambda$) sowie zumindest eine Gestaltfunktion (d) aufzunehmen, um die Gestaltungsregel für den Abstimmparameter (16) festzulegen, wobei der Abstimmparameterrechner (16) eine Einrichtung zum Erzeugen zumindest eines Abstimmparameters (m) als Funktion der Prozeßparameter (p), der zumindest einen Gestaltfunktion (g) und des zumindest einen Durchführungsparameters ($\lambda$) aufweist, und wobei der Abstimmparameterrechner (16) mit dem Steuerungsgerät (12) verbunden ist, um zumindest einen Abstimmparameter (M) an das Steuergerät anzulegen,

wobei die Verfahrens- und Abstimmparameterrechner (14, 16) beide eine Mehrzahl von Funktionsblöcken auf Mikroprozessorbasis aufweisen, welche miteinander verbunden sind und so betreibbar sind, daß sie aufgenommene Werte entsprechend jeweiligen Funktionen aus den ausgewählten Funktionen und der zumindest einen Gestaltfunktion (g) handhaben.

2. Anpassungsfähige Steueranordnung nach Anspruch 1, für ein Verfahren (10'), das aus einem Wärmetauscher besteht, der einen Einlaß (80) für ein kaltes Fluid hat, mit einem Kaltfluidstrom ($W_2$), einer Einlaßtemperatur ($T_{2i}$) des Kaltfluids und einer Auslaßtemperatur ($T_2$) des Kaltfluids, sowie einen Heißfluideinlaß (82) hat, mit einem Heißfluidstrom ($W_1$), einer Heißfluideinlaßtemperatur ($T_{1i}$) und einer Heißfluidauslaßtemperatur ($T_1$), wobei (Figur 6) der Verfahrensparameterrechner (14) einen ersten Funktionsblock zum Feststellen einer Änderung ($\triangle T_2$) der Kaltfluidtemperatur, einen zweiten Funktionsblock zum Feststellen einer Änderung ($D_2$) der Heißfluidtemperatur, einen dritten Funktionsblock zum Dividieren der Kaltfluidtemperaturänderung durch die Heißfluidtemperaturänderung, einen vierten Funktionsblock zum Dividieren eines Wertes, der eine Funktion der Kalt- und Heißfluiddurchflußraten ($W_1$, $W_2$) darstellt, durch die Heißfluidtemperaturänderung, einen fünften Funktionsblock zum Multiplizieren der Kaltfluidtemperaturänderung durch einen Ausgangswert des vierten Funktionsblockes, einen sechsten Funktionsblock zum Addieren eines Wertes 1 zu einem Ausgabewert des fünften Funktionsblockes, einen siebten Funktionsblock zum Subtrahieren eines Ausgangswertes des dritten Funktionsblockes von dem Wert 1, einen achten Funktionsblock zum Dividieren eines nominellen Wertes für einen zweiten Verfahrensparameter durch den Ausgangswert des sechsten Funktionsblockes, um einen zweiten Verfahrensparameter ($T_L$) zu erzeugen, einen neunten Funktionsblock zum Dividieren eines nominellen Wertes für einen dritten Verfahrensparameter durch den Ausgangswert des sechsten Funktionsblockes, um einen dritten Verfahrensparameter ($T_D$), einen zehnten Funktionsblock zum Dividieren des Ausgangswertes des siebten Funktionsblockes durch den Ausgangswert des sechsten Funktionsblockes und einen elften Funktionsblock aufweist, um einen Ausgangswert des zehnten Funktionsblockes mit einem Nominalwert für einen ersten Verfahrensparameter zu multiplizieren, um einen ersten Verfahrensparameter (K) zu erzeugen.

3. Anpassungsfähige Steuereinrichtung nach Anspruch 1, für ein Verfahren (10), welches durch einen PID-Regler gesteuert wird, wobei der Verfahrensparameterrechner (14) so betreibbar ist, daß er erste, zweite und dritte Verfahrensparameter ($P_1$, $P_2$, $P_3$) erzeugt, und wobei der Abstimmparameterrechner (16) (Figur 5) einen ersten Funktionsblock zum Dividieren eines ersten Durchführungsparameters ($\lambda_1$) durch den ersten Verfahrensparameter ($P_1$), einen zweiten Funktionsblock zum Dividieren des dritten Verfahrensparameters ($P_3$) durch den zweiten Verfahrensparameter ($P_2$), einen dritten Funktionsblock, um den Ausgangswert des zweiten Funktionsblockes auf eine Potenz anzuheben, die einem zweiten Durchführungsparameter ($\lambda_2$) entspricht, einen vierten Funktionsblock zum Multiplizieren eines Ausgangswertes des dritten Funktionsblockes mit einem Ausgangswert des ersten Funktionsblockes, um einen ersten Abstimmparameter ($m_1$) zu erzeugen, einen fünften Funktionsblock, um den Ausgangswert des zweiten Funktionsblockes auf eine Potenz anzuheben, die einem fünften Durchführungsparameter ($\lambda_5$) entspricht, einen sechsten Funktionsblock zum Multiplizieren des Ausgangswertes des zweiten Funktionsblockes mit einem Durchführungsparameter ($\lambda_3$), einen siebten Funktionsblock zum Aufsummieren eines Ausgangswertes des sechsten Funktionsblockes mit dem zweiten Durchführungsparameter ($\lambda_2$), einen achten Funktionsblock zum Dividieren des dritten Verfahrensparameters ($\lambda_3$) durch einen Ausgangswert des siebten Funktionsblockes, um einen zweiten Abstimmparameter ($m_2$) zu erzeugen, einen neunten Funktionsblock zum Multiplizieren eines Ausgangswertes des fünften Funktionsblockes mit einem vierten Durchführungsparameter ($\lambda_4$) und einen zehnten Funktionsblock aufweist zum Multiplizieren des zweiten Verfahrensparameters ($P_2$) mit einem Ausgangswert des neunten Funktionsblockes, um einen dritten Abstimmparameter ($m_3$) zu erzeugen.

**Revendications**

1. Système de commande adaptative d'un processus (10) commandé par un contrôleur (12) lequel, en service, reçoit un signal de consigne (c) pour le processus et génère une sortie de commande (u), le

7

processus (10) fournissant une sortie de processus (y) et étant soumis à une multiplicité de perturbations (d), le système de commande (8) comprenant:

un calculateur de paramètres de processus (14) destiné à recevoir les perturbations (d), la sortie de commande (u) et le signal de consigne (c), et à générer une multiplicité de paramètres de processus (p) qui sont chacun une somme de fonctions sélectionnées de chacun des éléments suivants: perturbations (d), sortie de commande (u) et signal de consigne (c); et

un calculateur de paramètres d'accord (16) relié au calculateur de paramètres de processus (14) en vue de recevoir la multiplicité de paramètres de processus (p) et de recevoir au moins un paramètre de performance (λ) et au moins une fonction de calcul (g) afin d'établir la règle de calcul du calculateur de paramètres d'accord (16), le calculateur de paramètres d'accord (16) comportant des moyens pour générer au moins un paramètre d'accord (m) en fonction des paramètres du processus (p), de la fonction de calcul au nombre d'au moins un (g) et du paramètre de performance au nombre d'au moins un (λ), le calculateur de paramètres d'accord (16) étant relié au contrôleur (12) en vue d'appliquer le paramètre d'accord au nombre d'au moins un (M) au contrôleur;

dans lequel les calculateurs de paramètres de processus et d'accord (14, 16) comprennent tous deux une multiplicité de blocs de fonctions à microprocesseur reliés les uns aux autres et aptes à manipuler des valeurs recues selon des fonctions respectives parmi lesdites fonctions sélectionnées et ladite fonction de calcul au nombre d'au moins un (g).

2. Système de commande adaptative selon la revendication 1, pour un processus (10') qui est un échangeur de chaleur ayant une entrée de fluide froid (80) présentant un débit de fluide froid ($W_2$), une température d'entrée de fluide froid ($T_{2i}$) et une température de sortie de fluide froid ($T_2$), et une entrée de fluide chaud (82) présentant un débit de fluide chaud ($W_1$), une température d'entrée de fluide chaud ($T_{1i}$) et une température de sortie de fluide chaud ($T_1$), dans lequel (figure 6) le calculateur de paramètres de processus (14) comprend un premier bloc de fonction pour établir une modification ($\triangle T_2$) de la température du fluide froid, un second bloc de fonction pour établir une modification ($D_2$) de la température du fluide chaud, un troisième bloc de fonction pour diviser la modification de la température de fluide froid par la modification de la température de fluide chaud, un quatrième bloc de fonction pour diviser une valeur qui est une fonction des débits du fluide chaud et du fluide froid ($W_1$, $W_2$) par la modification de la température du fluide chaud, un cinquième bloc de fonction pour multiplier la modification de la température de fluide froid par une sortie du quatrième bloc de fonction, un sixième bloc de fonction pour ajouter une valeur 1 à une sortie du cinquième bloc de fonction, un septième bloc de fonction pour soustraire une sortie du troisième bloc de fonction de la valeur 1, un huitième bloc de fonction pour diviser une valeur nominale relative à un second paramètre de processus par la sortie dudit sixième bloc de fonction afin de produire un second paramètre de processus ($T_L$), un neuvième bloc de fonction pour diviser une valeur nominale relative à un troisième paramètre de processus par la sortie du sixième bloc de fonction pour générer un troisième paramètre de processus ($T_D$), un dixième bloc de fonction pour diviser la sortie du septième bloc de fonction par la sortie du sixième bloc de fonction, et un onzième bloc de fonction pour multiplier une sortie du dixième bloc de fonction par une valeur nominale relative à un premier paramètre de processus afin de générer un premier paramètre de processus (K).

3. Système de commande adaptative selon la revendication 1, pour un processus (10) qui est commandé par un contrôleur PID, dans lequel le calculateur de paramètres de processus (14) est apte à générer des premier, second et troisième paramètres de processus ($P_1$, $P_2$, $P_3$) et dans lequel le calculateur de paramètres d'accord (16) comprend (figure 5) un premier bloc de fonction pour diviser un premier paramètre de performance ($\lambda_1$) par le premier paramètre de processus ($P_1$), un second bloc de fonction pour diviser le troisième paramètre de processus ($P_3$) par le second paramètrre de processus ($P_2$), un troisième bloc de fonction pour élever une sortie du second bloc de fonction à une puissance correspondant à un second paramètre de performance ($\lambda_2$), un quatrième bloc de fonction pour multiplier une sortie du troisième bloc de fonction par une sortie du premier bloc de fonction pour générer un premier paramètre d'accord ($m_1$), un cinquième bloc de fonction pour élever la sortie du second bloc de fonction à une puissance correspondant à un cinquième paramètre de performance ($\lambda_5$), un sixième bloc de fonction pour multiplier la sortie du second bloc de fonction par un troisième paramètre de performance ($\lambda_3$), un septième bloc de fonction pour effectuer la somme d'une sortie du sixième bloc de fonction et du second paramètre de performance ($\lambda_2$), un huitième bloc de fonction pour diviser le troisième paramètre de processus ($\lambda_3$) par une sortie du septième bloc de fonction pour générer un second paramètre d'accord ($m_2$), un neuvième bloc de fonction pour multiplier une sortie du cinquième bloc de fonction par un quatrième paramètre de performance ($\lambda_4$), et un dixième bloc de fonction pour multiplier le second paramètre de processus ($P_2$) par une sortie du neuvième bloc de fonction pour générer un troisième paramètre d'accord ($m_3$).

FIG. 1

FIG. 2

FIG. 3

EP 0 087 974 B1

FIG. 4

FIG. 5

FIG. 6

$$\left[\frac{K_{10}}{U}(W_1+W_2)\right]^\circ$$

set
point

FIG. 7